# EUROPÄISCHE PATENTANMELDUNG

(11) **EP 1 956 363 A1**
(43) Veröffentlichungstag der Anmeldung: **13.08.2008**
(21) Anmeldenummer: 08001755.1
(22) Anmeldetag: 30.01.2008
(51) Int. Cl.: G01N 21/35, G01N 21/61, G01N 21/03

(54) **Substrat mit integriertem Filter für Gassensoranordnungen**

(30) Priorität: 07.02.2007 DE 102007006155
(71) Anmelder: Tyco Electronics Raychem GmbH, 85521 Ottobrunn (DE)
(72) Erfinder: Frodl, Robert, 81825 München (DE); Buchberger, Ludwig, 85757 Karlsfeld (DE); Mählich, Reinhold, 85221 Dachau (DE)
(74) Vertreter: Grünecker, Kinkeldey, Stockmair & Schwanhäusser Anwaltssozietät

(57) **Zusammenfassung**

Die vorliegende Anmeldung bezieht sich auf eine Gassensoranordnung zum Nachweis mindestens eines Analyten in einem Messgas sowie auf ein Substrat, auf dem eine Messkammer der Gassensoranordnung montierbar ist. Die vorliegende Anmeldung ist insbesondere in Zusammenhang mit Gassensoranordnungen einsetzbar, die mindestens eine Strahlung emittierende Strahlungsquelle, eine Messkammer, die mit einem Messgas, das einen zu messenden Analyten enthält, befüllbar ist, und mindestens eine die Strahlung detektierende Detektoreinrichtung aufweist, die ein von der Anwesenheit und/oder der Konzentration des Analyten abhängiges Ausgangssignal erzeugt. Erfindungsgemäß wird ein Substrat (104) zum Montieren mindestens einer Gassensoranordnung angegeben, wobei in dem Substrat mindestens ein Filter (110) zum Filtern des Messgases integriert ist und eine Messkammer (102) so auf dem Substrat montierbar ist, dass eine Eintrittsöffnung (108), die zum Eintreten des Messgases in die Messkammer vorgesehen ist, wenigstens teilweise von dem mindestens einen Filter abgedeckt ist.

## Beschreibung

Die vorliegende Erfindung bezieht sich auf eine Gassensoranordnung zum Nachweis mindestens eines Analyten in einem Messgas sowie auf ein Substrat, auf dem eine Messkammer der Gassensoranordnung montierbar ist.

Die vorliegende Erfindung ist insbesondere in Zusammenhang mit Gassensoranordnungen einsetzbar, die mindestens eine Strahlung emittierende Strahlungsquelle, eine Messkammer, die mit einem Messgas, das einen zu messenden Analyten enthält, befüllbar ist, und mindestens eine die Strahlung detektierende Detektoreinrichtung aufweist, die ein von der Anwesenheit und/oder der Konzentration des Analyten abhängiges Ausgangssignal erzeugt.

Derartige Gassensoren sind für den Nachweis verschiedenster Analyte, beispielsweise Methan oder Kohlendioxid, bekannt. Dabei basieren solche Gassensoren, wie sie beispielsweise in der DE 10 2004 007 946 A1 im Detail erläutert sind, auf der Eigenschaft vieler mehratomiger Gase, Strahlung, insbesondere im infraroten Wellenlängenbereich, zu absorbieren. Dabei tritt diese Absorption in einer für das betreffende Gas charakteristischen Wellenlänge auf, z. B. im Fall von CO₂ bei 4,24 µm. Mit Hilfe von derartigen Infrarotgassensoren ist es daher möglich, das Vorhandensein einer Gaskomponente und/oder die Konzentration dieser Gaskomponente äußerst empfindlich festzustellen.

So genannte "Non Dispersive Infrared" (NDIR)-Gassensoren weisen eine Infrarotstrahlungsquelle, eine als Absorptionsstrecke dienende Messkammer und einen Strahlungsdetektor auf. Die von dem Strahlungsdetektor gemessene Strahlungsintensität ist ein Maß für die Konzentration des absorbierenden Gases. Meist wird eine breitbandige Strahlungsquelle verwendet und über ein Interferenzfilter oder Gitter kann die interessierende Wellenlänge eingestellt werden. Alternativ kann auch eine selektive Strahlungsquelle, beispielsweise eine lichtemittierende Diode oder ein Laser, in Kombination mit nichtwellenlängenselektiven Strahlungsempfängern eingesetzt werden.

Insbesondere die Kohlendioxiddetektion gewinnt im Kraftfahrzeugbereicht zunehmend an Bedeutung. Dies ist zum einen dadurch bedingt, dass in Kraftfahrzeugen zur Erhöhung der Energieeffizienz bei Heizung und Klimatisierung der CO₂-Gehalt der Innenraumluft überwacht wird, um nur bei Bedarf, d. h. bei erhöhter CO₂-Konzentration, eine Frischluftzufuhr über eine entsprechende Lüfterklappenansteuerung zu veranlassen. Zum anderen basieren moderne Klimaanlagen auf CO₂ als Kühlmittel. Daher können CO₂-Gassensoren eine Überwachungsfunktion im Zusammenhang mit austretendem CO₂ bei eventuellen Defekten erfüllen.

Insbesondere im Kraftfahrzeugbereich müssen derartige Sensoren höchste Anforderungen an Robustheit, Zuverlässigkeit und Miniaturisierbarkeit erfüllen.

Eine schematische Darstellung einer bekannten Gassensoreinheit, wie sie beispielsweise aus der DE 10 2004 007 946 A1 bekannt ist, ist schematisch in Figur 2 dargestellt.

Dabei ist die Messkammer 202 der bekannten Gassensoranordnung 200 üblicherweise auf einem Substrat 204 aufgebaut. Meist handelt es sich bei dem Substrat 204 um eine gedruckte Leiterplatte, ein sogenanntes Printed Circuit Board (PCB). Auf dem Substrat 204 können neben der Messkammer 202 verschiedene elektronische Komponenten 206 montiert und über gedruckte Leiterbahnen, die hier nicht dargestellt sind, miteinander verbunden sein. Insbesondere können innerhalb der Messkammer 202 (entsprechend der Anordnung aus der DE 10 2004 007 946 A1) die benötigten Strahlungsquellen und Detektoreinrichtungen auf dem Substrat 204 montiert sein.

Die Messkammer 202 hat eine Eintrittsöffnung 208, durch welche hindurch das Messgas in die Messkammer eindringen kann. Bei üblichen Gassensoranordnungen 200 ist die Eintrittsöffnung 208 mit einem eingeschweißten Membranfilter 210 abgedeckt. Dieser Filter ist erforderlich, damit Schmutz und Störkomponenten nicht in die Messkammer 202 eindringen und das Messergebnis verfälschen können. Zum Schutz der Messkammer 210, die im Folgenden auch als Küvette bezeichnet wird, sowie der elektronischen Komponenten 206 wird die bekannte Gassensoranordnung 200 in der Regel von einem Umgehäuse 212 umgeben, das meist durch einen Deckel 214 geschlossen wird. Eine Gehäuseöffnung 216 sorgt für den Kontakt der Eintrittsöffnung 208 mit der zu analysierenden Umgebung.

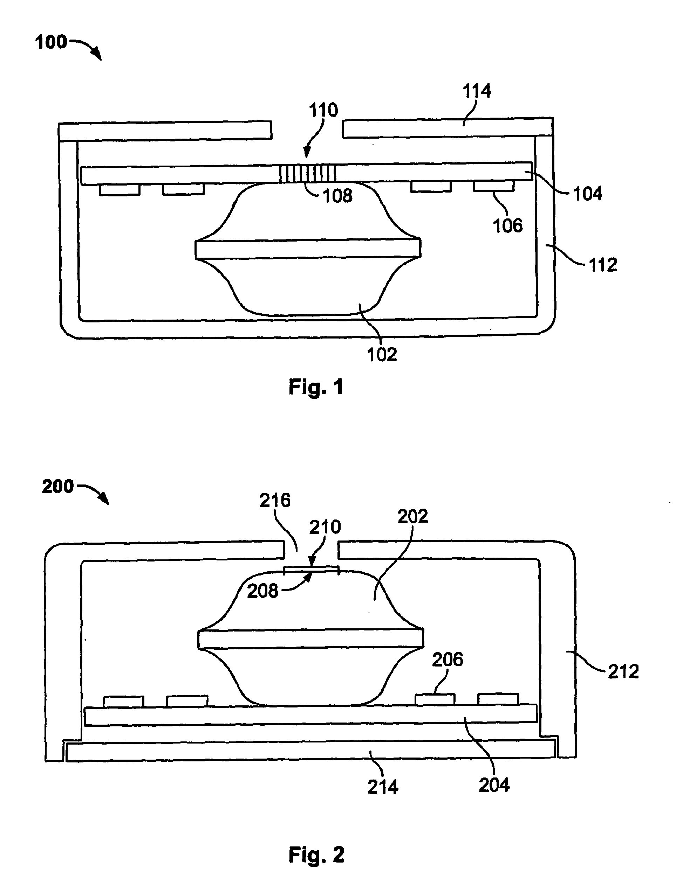

Bei der in Figur 2 gezeigten Gassensoranordnung 200 besteht jedoch, wie generell bei allen Gassensoren, die ein inneres, für die Messung notwendiges Volumen, also eine Messkammer oder Küvette, haben, welches durch ein äußeres Gehäuse, also das Umgehäuse 212, zum Schutz vor mechanischer Beschädigung und zur Montage an einem Bauraum umgeben ist, das Problem, dass die Zeitkonstante t90 für das Ansprechen der Sensoranordnung durch die verschiedenen Volumina und Leckstellen im Allgemeinen erhöht wird.

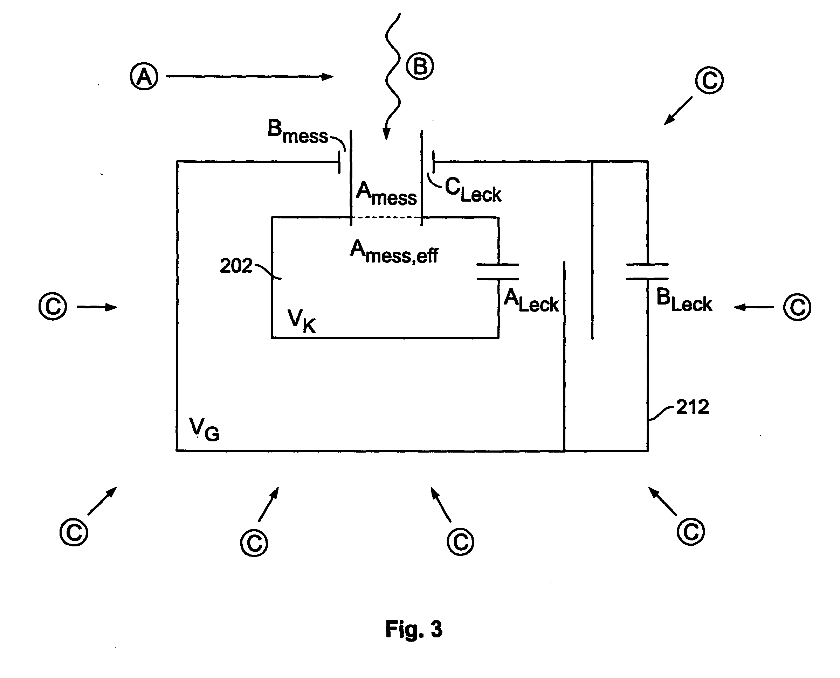

Figur 3 zeigt schematisch die zu berücksichtigenden Abmessungen und Größen. Die Messkammer 202 hat ein Küvettenvolumen VK (in mm³) und eine geometrische Öffnungsfläche zum Gasaustausch mit der Größe AMess (in mm²). Durch den Membranfilter 210 verringert sich diese Messfläche auf eine effektive Messfläche Amess,eff (in mm³). Weiterhin hat die Messkammer ein Gesamtleck ALeck (in mm²) in das Umgehäuse 212.

Das Umgehäuse besitzt ein Innenvolumen VG (in mm³), wobei alle, beispielsweise durch die Bauelemente 206, die Messkammer 202 und das Substrat 204, beanspruchten Volumina dabei schon abgezogen sind. Die aktive Fläche zum Gasaustausch mit der Umgebung sei BMess (in mm²). Zur Umgebung hat das Umgehäuse 212 ein Gesamtleck BLeck (in mm²). Weiterhin existiert zwischen dem Umgehäuse 212 und der Messkammer 202 nicht nur das unbeabsichtigte Leck ALeck, sondern je nach Konstruktion auch das vorhandene Leck CLeck (in mm²) an der Gasaustauschöffnung zur Umgebung.

Das zu messende Gas kann prinzipiell auf drei verschiedene Arten in das zur Messung maßgebliche Küvettenvolumen VK gelangen: Mit A ist die laminare Vorbeiströmung und Diffusion an der Grenzschicht zur Gehäuseoberfläche symbolisiert. Mit B wird ein turbulentes Anblasen aus frontaler Richtung gekennzeichnet und mit C die Diffusion aus allen Raumrichtungen bezeichnet.

Die bereits angesprochene Erhöhung der Zeitkonstante t90 für das Ansprechen der Sensoranordnung auf eine Änderung der Gaskonzentration ergibt sich durch die gebildeten umschlossenen Mischvolumina, die immer größer sind als das Messvolumen in der Messkammer 202, und die gleichzeitig begrenzte Messöffnung, die den Gasaustausch behindert.

Da eine möglichst kleine Zeitkonstante t90 wünschenswert ist, bedeutet dies, dass die Messkammer außer an der Eintrittsöffnung 208 dicht sein muss, die durch den Filter begrenzte effektive Eintrittsöffnung möglichst groß sein muss und dass das Umgehäuse 212 möglichst offen gestaltet werden muss, um über die Leckraten in die Messkammer keinen verfälschenden Einfluss auszuüben. Damit wird aber gleichzeitig die Schutzfunktion des Gehäuses 212 reduziert.

Die Erfahrungen mit den bekannten Lösungen gemäß Figur 2 haben gezeigt, dass die Vielzahl der mechanischen Schnittstellen im Küvettendesign sowie zu der Leiterplatte 204 hin eine Abdichtung der Messkammer 202 erschweren und diese daher erheblich verteuern. Die Messkammer 202 muss weiterhin so klein wie möglich ausgelegt werden, da die verfügbaren Filter in der Regel sehr teuer sind. Schließlich bedingt die offene Gestaltung des Umgehäuses 212, dass das Umgehäuse 212 relativ komplex und damit teuer in seiner Herstellung wird.

Es besteht daher das Bedürfnis, eine Gassensoranordnung zu entwickeln, welche die beschriebenen Probleme mit den bekannten Anordnungen überkommt und eine möglichst kurze Ansprechzeit des Sensors bei gleichzeitig einfacher und kostengünstiger Herstellbarkeit gewährleistet.

Somit besteht die Aufgabe, die der vorliegenden Erfindung zugrunde liegt, darin, eine verbesserte Gassensoranordnung anzugeben, die bei verringerter Ansprechzeit eine robuste und kompakte Bauweise sowie eine kostengünstige Herstellbarkeit besitzt.

Diese Aufgabe wird durch eine Gassensoranordnung mit den Merkmalen des Patentanspruchs 1, ein Substrat mit den Merkmalen des Patentanspruchs 15 sowie ein Herstellungsverfahren mit den Schritten des Patentanspruchs 21 gelöst. Vorteilhafte Weiterbildungen der vorliegenden Erfindung sind Gegenstand der abhängigen Patentansprüche.

Dabei basiert die vorliegende Erfindung auf dem Grundgedanken, den erforderlichen Filter in dem Substrat zu integrieren und die Messkammer so auf dem Substrat zu montierten, dass die Eintrittsöffnung von dem Filter abgedeckt ist. Mit dieser erfindungsgemäßen Lösung kann die Messkammer wesentlich einfacher und damit dicht ausgeführt werden. Die Gesamtkonstruktion wird signifikant reduziert und es ergibt sich eine deutliche Kosteneinsparung. Aufgrund der verringerten Leckstellen kann die Zeitkonstante für das Ansprechen der Gassensoranordnung in vorteilhafter Weise verkürzt werden.

Gemäß einer vorteilhaften Ausführungsform der vorliegenden Erfindung ist der Filter durch Öffnungen gebildet, die durch das Substrat hindurch verlaufen, wobei die Querschnittsfläche der Öffnungen im Verhältnis zu ihrer longitudinalen Ausdehnung so gewählt ist, dass die Störkomponenten aufgrund von Oberflächenspannungseffekten zurückgehalten werden. Auf diese Weise kann besonders einfach und effektiv eine Filterfunktion unmittelbar durch das Material des Substrats selbst erzielt werden und ein zusätzlicher Filter sowie der damit verbundene Montagevorgang können eingespart werden.

Beispielsweise bei Verwendung einer in SMD-Technik bestückten Leiterplatte können mit Hilfe von Lasersystemen auf kostengünstige Weise sehr feine und gleichzeitig tiefe Löcher, so genannte Mikrovias, in Leiterplatten gebohrt werden. Mit Hilfe der Lasertechnik können die Lochdurchmesser im Vergleich zur Leiterplattendicke so klein gehalten werden, dass die Oberflächenspannungen der in Frage kommenden Reagenzien ein Eindringen derselben verhindern. Dabei kann der integrierte Filter während des etablierten Substratherstellungsprozesses ohne zusätzliche Arbeitsschritte realisiert werden, da Durchkontaktierungen ohnehin vorgesehen werden müssen.

Ein Umgehäuse, das die elektronischen Bauteile und die Messkammer mechanisch schützt, kann ohne jede Öffnung vorgesehen werden und ist daher in der Herstellung äußerst kostengünstig

Anhand der in den beiliegenden Zeichnungen dargestellten vorteilhaften Ausgestaltungen wird die Erfindung im Folgenden näher erläutert. Es zeigen:
- **Figur** 1: eine schematische Schnittdarstellung einer erfindungsgemäßen Gassensoranordnung;
- **Figur 2**: eine schematische Schnittanordnung einer bekannten Gassensoranordnung;
- **Figur 3**: eine schematische Übersicht über die bei Gassensoren beteiligten Flächen, Volumina und Strömungsverhältnisse.

Der Aufbau und die Wirkungsweise der erfindungsgemäßen Gassensoranordnung 100 soll im Folgenden mit Bezug auf Figur 1 genauer erläutert werden. Dabei sind, um die Übersicht zu wahren, die für die Signalerzeugung der Sensoren spezifischen Komponenten, wie Strahlungsquelle oder Detektoreinheit, nicht dargestellt, um die Übersichtlichkeit zu bewahren. Darüber hinaus ist zwar die erfindungsgemäße Integration des Filters in das Substrat besonders vorteilhaft beim Einsatz für einen Infrarotgassensor, insbesondere einen CO₂-Sensor, aber keinesfalls auf diesen Spezialfall begrenzt.

Wie in Figur 1 gezeigt, weist die Gassensoranordnung 100 eine Messkammer 102, die im Folgenden auch als Küvette bezeichnet wird, auf, die eine Eintrittsöffnung 108 zum Eintreten des Messgases in die Messkammer 102 besitzt. Erfindungsgemäß ist die Messkammer 102 so auf einem Substrat 104 montiert, dass die Eintrittsöffnung 108 von einem in dem Substrat integrierten Filter 110 abgedeckt wird.

In der hier gezeigten Ausführungsform ist das Substrat 104 beispielsweise eine gedruckt Leiterplatte (Printed Circuit Board, PCB), die in oberflächenmontierbarer Technik (Surface Mount Device, SMD) mit verschiedenen elektronischen Bauteilen 106 bestückt ist. Der Filter 110 ist durch eine Vielzahl von feinen Bohrungen, die beispielsweise mittels eines Lasers eingebracht werden, realisiert.

Dabei werden diese sehr feinen und gleichzeitig tiefen Löcher in ihren Abmessungen so gewählt, dass der Lochdurchmesser im Vergleich zur Leiterplattendicke klein genug ist, um ein Eindringen von Störkomponenten über die Oberflächenspannungen zu verhindern. Selbstverständlich können aber auch andere Möglichkeiten, einen integrierten Filter bereitzustellen, genutzt werden.

Beispielsweise kann eine flexible Leiterplatte mit einem laminierten Membranfilter oder eine Keramikleiterplatte mit entsprechenden integrierten Filterstrukturen verwendet werden.

Ein wesentlicher Vorteil der erfindungsgemäßen in das Substrat 104 integrierten Filterfunktion besteht vor allem darin, dass das Umgehäuse 112 ganz ohne zusätzliche Öffnungen ausgeführt werden kann. Die Gehäuseöffnung 116 kann bei dieser Variante in einem Deckel 114 vorgesehen sein, der aufgrund seiner im Wesentlichen planen Geometrie deutlich einfacher strukturiert werden kann als das dreidimensional Umgehäuse 112.

Alternativ kann aber auch komplett auf den Deckel 114 verzichtet werden, weil die elektronischen Komponenten 106 und die Messkammer 102 sich auf einer der Umgebung abgewandten Seite des Substrats 104 befinden und Gehäuse und Substrat deshalb so passgenau ausgestaltet werden können, dass das Substrat die Funktion eines Deckels erfüllen kann und dennoch keine unerwünschten Lecks auftreten.

Die Herstellung des integrierten Filters mit Hilfe von Laserbohrungen bietet die der Lasertechnik inhärenten Vorteile: keine mechanische Krafteinwirkung auf das Werkstück, minimale wärmebeeinflusste Zone, hohe Bearbeitungsgeschwindigkeiten, beliebige Konturbearbeitung, optimale Werkstoffausnutzung, hohe Flexibilität, hohe Reproduzierbarkeit und Qualität, sowie ein optimales Kostennutzenverhältnis.

### Bezugszeichenliste

| **Bezugszeichen** | **Beschreibung** |
|---|---|
| 200 | Messkammer, Küvette |
| 204 | Substrat |
| 206 | Elektronische Komponenten |
| 208 | Eintrittsöffnung |
| 210 | Membranfilter |
| 212 | Umgehäuse |
| 214 | Deckel |
| 216 | Gehäuseöffnung |
| 100 | Gassensoranordnung |
| 102 | Messkammer |
| 104 | Substrat |
| 106 | Elektronische Komponenten |
| 108 | Eintrittsöffnung |
| 110 | Filter |
| 112 | Umgehäuse |
| 114 | Deckel |
| 116 | Gehäuseöffnung |

## Patentansprüche

1. Gassensoranordnung zum Nachweis mindestens eines Analyten in einem Messgas, wobei die Gassensoranordnung (100) umfasst:
eine Messkammer (102), die mindestens eine Eintrittsöffnung (108) zum Eintreten des Messgases in die Messkammer aufweist,
mindestens eine Detektoreinrichtung, die ein von der Anwesenheit und/oder der Konzentration des Analyten in der Messkammer abhängiges Ausgangssignal erzeugt,
ein Substrat (104), auf dem die Messkammer montiert ist,
mindestens einen Filter (110), der zum Filtern des eintretenden Messgases an der Eintrittsöffnung angeordnet ist,
wobei der Filter in dem Substrat integriert ist und die Messkammer so auf dem Substrat montiert ist, dass die mindestens eine Eintrittsöffnung wenigstens teilweise von dem mindestens einen Filter abgedeckt ist.

2. Gassensoranordnung nach Anspruch 1, wobei der Filter durch mindestens eine durch das Substrat hindurch verlaufende Öffnung gebildet ist, deren Querschnittsfläche im Verhältnis zu ihrer longitudinalen Ausdehnung so gewählt ist, dass vorbestimmte Störkomponenten aufgrund von Oberflächenspannungseffekten zurückgehalten werden.

3. Gassensoranordnung nach Anspruch 2, wobei die mindestens eine Öffnung mittels eines Lasers gebohrt ist.

4. Gassensoranordnung nach mindestens einem der vorangegangenen Ansprüche, weiterhin umfassend ein Umgehäuse (112), das die Messkammer wenigstens teilweise umgibt.

5. Gassensoranordnung nach mindestens einem der vorangegangenen Ansprüche, wobei das Substrat (104) eine gedruckte Leiterplatte umfasst.

6. Gassensoranordnung nach mindestens einem der vorangegangenen Ansprüche, weiterhin umfassend: mindestens eine Strahlung emittierende Strahlungsquelle, wobei die mindestens eine Detektoreinrichtung angepasst ist, die emittierte Strahlung zu detektieren.

7. Gassensoranordnung nach mindestens einem der vorangegangenen Ansprüche, wobei die zu detektierende Strahlung Infrarotstrahlung ist und die mindestens eine Strahlungsquelle durch eine Infrarotstrahlungsquelle, vorzugsweise eine lichtemittierende Diode oder eine ein breitbandiges Lichtspektrum emittierende Lampe, gebildet ist.

8. Gassensoranordnung nach einem der Ansprüche 6 oder 7, wobei die mindestens eine Detektoreinrichtung und/oder die mindestens eine Strahlungsquelle in oberflächen montierter Technik auf dem Substrat angeordnet ist.

9. Gassensoranordnung nach einem der Ansprüche 6 bis 8, wobei mindestens eine Messstrahlungsquelle und mindestens eine Referenzstrahlungsquelle vorgesehen sind, die symmetrisch zu mindestens einer Symmetrieachse der Messkammer angeordnet sind, und dass die Detektoreinrichtung so auf dieser Symmetrieachse angeordnet ist, dass die Strahlengänge der Strahlungsquellen die gleiche effektive Weglänge zu der Detektoreinrichtung aufweisen.

10. Gassensoranordnung nach mindestens einem der vorangegangenen Ansprüche, wobei eine Wandung der Messkammer (102) so ausgebildet ist, dass sie die von der Strahlungsquelle emittierte Strahlung reflektiert.

11. Gassensoranordnung nach mindestens einem der vorangegangenen Ansprüche, wobei die Messkammer vorzugsweise in Spritzgusstechnik aus Kunststoff herstellbar ist und die reflektierende Beschichtung eine Metallisierung ist.

12. Gassensoranordnung nach Anspruch 11, wobei die Metallisierung, vorzugsweise eine Goldschicht, durch Sputtern, Bedampfen oder mittels Galvanotechnik abgeschieden ist.

13. Gassensoranordnung nach mindestens einem der vorangegangenen Ansprüche, wobei sie dazu eingerichtet ist, gasförmige Analyten, vorzugsweise Kohlendioxid, nachzuweisen und/oder deren Konzentration zu bestimmen.

14. Gassensoranordnung nach mindestens einem der vorangegangenen Ansprüche, wobei mindestens ein Temperaturfühler zur Überwachung der Temperatur in der Messkammer vorgesehen ist.

15. Substrat zum Montieren mindestens einer Gassensoranordnung zum Nachweis mindestens eines Analyten in einem Messgas, wobei in dem Substrat (104) mindestens ein Filter (110) zum Filtern des Messgases integriert ist und eine Messkammer (102) so auf dem Substrat montierbar ist, dass eine Eintrittsöffnung (108), die zum Eintreten des Messgases in die Messkammer vorgesehen ist, wenigstens teilweise von dem mindestens einen Filter abgedeckt ist.

16. Substrat nach Anspruch 15, wobei der Filter durch mindestens eine durch das Substrat hindurch verlaufende Öffnung gebildet ist, deren Querschnittsfläche im Verhältnis zu ihrer longitudinalen Ausdehnung so gewählt ist, dass vorbestimmte Störkomponenten aufgrund von Oberflächenspannungseffekten zurückgehalten werden.

17. Substrat nach Anspruch 16, wobei die mindestens eine Öffnung mittels eines Lasers gebohrt ist.

18. Substrat nach einem der Ansprüche 15 bis 17, das in einem Umgehäuse (112), das die Messkammer wenigstens teilweise umgibt, montierbar ist.

19. Substrat nach einem der Ansprüche 15 bis 18, wobei das Substrat eine gedruckte Leiterplatte umfasst.

20. Substrat nach einem der Ansprüche 15 bis 19, wobei mindestens eine Detektoreinrichtung und/oder mindestens eine Strahlungsquelle in oberflächenmontierter Technik auf dem Substrat angeordnet ist.

21. Verfahren zum Herstellen einer Gassensoranordnung zum Nachweis mindestens eines Analyten in einem Messgas mit den folgenden Schritten:
Herstellen einer Messkammer, die mindestens eine Eintrittsöffnung zum Eintreten des Messgases in die Messkammer aufweist,
Herstellen ein Substrats, auf dem die Messkammer montierbar ist, wobei in dem Substrat mindestens ein Filter, der zum Filtern des eintretenden Messgases in die Eintrittsöffnung vorgesehen ist, integriert ist,
Montieren der Messkammer auf dem Substrat, so dass die mindestens eine Eintrittsöffnung wenigstens teilweise von dem mindestens einen Filter abgedeckt ist.

22. Verfahren nach Anspruch 21, wobei der Filter durch mindestens eine durch das Substrat hindurch verlaufende Öffnung gebildet ist, deren Querschnittsfläche im Verhältnis zu ihrer longitudinalen Ausdehnung so gewählt ist, dass vorbestimmte Störkomponenten aufgrund von Oberflächenspannungseffekten zurückgehalten werden.

23. Verfahren nach Anspruch 22, wobei die mindestens eine Öffnung mittels eines Lasers gebohrt ist.

24. Verfahren nach einem der Ansprüche 22 bis 23, das weiterhin den Schritt umfasst:
Montieren eines Umgehäuses, das die Messkammer wenigstens teilweise umgibt.

25. Verfahren nach einem der Ansprüche 22 bis 24, wobei das Substrat eine gedruckte Leiterplatte umfasst.

26. Verfahren nach einem der Ansprüche 22 bis 25, wobei mindestens eine Detektoreinrichtung und/oder mindestens eine Strahlungsquelle in oberflächenmontierter Technik auf dem Substrat aufgebaut werden.
